# EUROPÄISCHE PATENTSCHRIFT

(11) **EP 2 532 818 B1**
(45) Veröffentlichungstag und Bekanntmachung des Hinweises auf die Patenterteilung: **07.03.2018**
(21) Anmeldenummer: 12000462.7
(22) Anmeldetag: 26.01.2012
(51) Int. Cl.: E05D 5/02, E05D 7/12

(54) **Möbelbeschlag für ein bewegbares Möbelteil**
Fitting for a movable furniture part
Ferrure pour un élément de meuble mobile

(30) Priorität: 08.06.2011 DE 202011101542 U
(43) Veröffentlichungstag der Anmeldung: 12.12.2012
(73) Patentinhaber: Grass GmbH & Co. KG, 64354 Reinheim (DE)
(72) Erfinder: Schneider, Gabriele, 64407 Fränkisch-Crumbach (DE); Göttmann, Wilfried, 64395 Wersau (DE)
(74) Vertreter: Patentanwälte Magenbauer & Kollegen Partnerschaft mbB

(56) Entgegenhaltungen:
- EP-A1- 0 552 606
- DE-A1- 4 316 038
- US-A1- 2011 030 172

## Beschreibung

Die Erfindung betrifft ein Möbelbeschlag für ein bewegbares Möbelteil, insbesondere Tür, Klappe, Schublade oder dergleichen, mit wenigstens einem Beschlagteil mit Befestigungselementen, die am bewegbaren Möbelteil oder an einem Möbelkorpus eines mit dem bewegbaren Möbelteil ausgestatteten Möbels ausgebildeten Befestigungslöcher zugeordnet und in diese einführbar sind, wobei den Befestigungselementen jeweils wenigstens ein Spreizelement zugeordnet ist, das über eine relativ zwischen Befestigungselement und Spreizelement wirkenden Befestigungsbewegung radial aufspreizbar und in einer dadurch erzielbaren Klemmstellung mit einer Wandung des Befestigungsloches verspannbar ist.

Ein Möbelbeschlag dieser Art ist beispielsweise aus der DE 195 27 600 C5 bekannt. Der dort offenbarte Möbelbeschlag besitzt ein an einem Möbel befestigbares Beschlagteil mit zwei von seiner der Oberfläche der Möbelstück-Wand zugewandten Befestigungsfläche vortretenden, in jeweils eine zugeordnete Befestigungsbohrung in der Wand einführbaren Befestigungszapfen. Im hohlen Innern der Befestigungszapfen befindet sich jeweils ein in Zapfenlängsrichtung verstellbares und den Befestigungszapfen dabei - abhängig von der Verstellrichtung - aufspreizendes bzw. entspannendes Spreizelement, das einen sich in Richtung zum Beschlag konisch verjüngenden Spreizkörper aufweist. Der Spreizkörper geht in einen sich durch den Befestigungszapfen hindurch erstreckenden Schaft über, an dessen Ende ein sich an einer Druckfläche des Beschlagteils abstützendes, mit einer Handhabe versehenes und das Spreizelement bei Betätigung verstellendes Betätigungselement angeordnet ist. Beim Spannen durch Betätigung des Betätigungselementes wird der Spreizkörper nach oben gedrückt, wodurch die Enden des Befestigungszapfens aufgespreizt werden, so dass sich eine Verspannung mit der Wandung der Befestigungsbohrung ergibt.

Aus der AT 407 415 B ist eine zu der DE 195 27 600 C4 ähnliche Ausgestaltung offenbart. Auch hier wird die Verspannung durch das Zurückziehen eines konischen Spreizkörpers und einer damit verbundenen Aufspreizung eines Dübels bewirkt. US 2011/0030172 offenbart einen Möbelbeschlag nach dem Oberbegriff des Anspruchs 1. Beim vorgenannten Stand der Technik ist es notwendig, speziell ausgestaltete Spreizelemente mit konischen Spreizkörpern sowie komplementär hierzu ausgestaltete Dübel zu verwenden. Dies erfordert einen nicht unerheblichen Kostenaufwand. Aufgabe der Erfindung ist es, einen Möbelbeschlag der eingangs erwähnten Art zu schaffen, der eine große Variabilität bei der Befestigung an einem bewegbaren Möbelteil oder an einem Möbelkorpus bietet, wobei die für die Befestigung notwendigen Teile kostengünstig herzustellen sind.

Diese Aufgabe wird durch einen Möbelbeschlag mit den Merkmalen des unabhängigen Anspruchs 1 und einem Möbel mit den Merkmalen des Anspruchs 16 gelöst. Weiterbildungen der Erfindung sind in den Unteransprüchen dargestellt. Der erfindungsgemäße Möbelbeschlag zeichnet sich dadurch aus, dass das wenigstens eine Spreizelement eine Durchgangsöffnung aufweist, über das es auf dem zugeordneten Befestigungselement aufgefädelt ist und dort relativ zu diesen derart verschieblich gelagert ist, dass die radiale Aufspreizung und Verspannung mit der Wandung des Befestigungsloches bei Einleitung der Befestigungsbewegung über eine Verringerung des Axialmaßes des Spreizelementes erzielbar ist.

Ein wichtiger Aspekt der Erfindung ist, dass das wenigstens eine Spreizelement auf das Befestigungselement auffädelbar ist. Das Spreizelement ist also ein vom Befestigungselement separates Bauteil, wodurch sich unterschiedliche Gegebenheiten bei der Montage des Möbelbeschlags am bewegbaren Möbelteil oder am Möbelkorpus durch unterschiedliche Anzahl oder unterschiedliche Form von Spreizelementen, die auf das Befestigungselement aufgefädelt sind, berücksichtigen lassen. Dadurch ergibt sich eine hohe Variabilität bei der Befestigung des Möbelbeschlags. Ein weiterer Unterschied gegenüber dem Stand der Technik ist, dass die radiale Aufspreizung und Verspannung mit einer Verringerung des Axialmaßes des Spreizelementes einhergeht. Dadurch lassen sich Zwischenräume zwischen dem zugeordneten Befestigungsloch und dem Befestigungselement optimal ausgleichen und je nach Ausgestaltung des Befestigungsloches und des Spreizelementes kann sich beim Verspannen eine formschlüssige und/oder kraftschlüssige Verbindung zwischen der Wandung des Befestigungsloches und dem Befestigungselement bilden.

Der erfindungsgemäße Möbelbeschlag eignet sich besonders als Schnellbefestigung insbesondere für Materialien mit geringer Festigkeit, beispielsweise Wabenplatten, leichte Spanplatten usw.. Das bewegliche bzw. bewegbare Möbelteil kann beispielsweise eine über eine Führungseinheit verschieblich an einem Möbelkorpus bewegbar aufgenommene Schublade bzw. ein Auszug sein bzw. eine gegenüber einem Möbelkorpus verschwenkbare Tür, Klappe oder dergleichen. Der Beschlag kann als Scharnier, Klappenbeschlag oder Führungseinheit eines Auszugs bzw. einer Schublade ausgestaltet sein.

Bei einer Weiterbildung der Erfindung besteht das wenigstens eine Spreizelement aus verformbarem Material, das unter der Wirkung der Befestigungsbewegung in die Klemmstellung verformbar ist.

Um ein einfaches und schnelles Lösen des Befestigungselements aus dessen Klemmstellung zu ermöglichen, ist es zweckmäßig, elastisch verformbares Material einzusetzen, wodurch das Spreizelement unter der Wirkung einer Lösebewegung des Befestigungselements im Wesentlichen in eine ungespreizte Ausgangsstellung zurückverformbar ist. Alternativ wäre auch eine teilweise plastische Verformung des Spreizelementes denkbar, falls dadurch das einfache und schnelle Lösen nicht behindert wäre. Erfindungsgemäß weist das Spreizelement, eine Wölbung auf, dessen sich in Axialrichtung erstreckende Wölbungshöhe unter der Wirkung der Befestigungsbewegung unter radialer Aufspreizung verringerbar ist. Das Spreizelement mit einer derartigen Wölbung kann also unter der Wirkung der Befestigungsbewegung "plattgedrückt" werden, während es sich gleichzeitig radial aufspreizt. Erfindungsgemäß ist das Spreizelement als im Querschnitt U-ähnlich gewölbter Ringkörper ausgestaltet, mit einem von der Durchgangsöffnung durchsetzten Basisabschnitt und zwei vom Basisabschnitt in divergierender Weise wegragenden Schenkelabschnitten. Das Spreizelement ist insgesamt sattelartig ausgebildet.

In besonders bevorzugter Weise ist das Spreizelement in Draufsicht O-ähnlich, insbesondere oval oder kreisförmig ausgestaltet. Zweckmäßigerweise sitzt die Durchgangsöffnung dabei zentral.

Es ist möglich, dass mehrere Spreizelemente in Axialrichtung hintereinander auf dem zugeordneten Befestigungselement zu einem Spreizelement-Stapel aufgereiht sind. Die Zahl an aufgefädelten Spreizelementen ist beliebig, wodurch sich eine Anpassung an unterschiedliche Tiefen der Befestigungslöcher in einfacher und schneller Weise durchführen lässt.

In besonders bevorzugter Weise sind einander benachbarte Spreizelemente entweder gleichsinnig zueinander ausgerichtet, wodurch einander benachbarte Basisabschnitte ineinander greifen oder verdreht zueinander ausgerichtet, wodurch der Basisabschnitt des einen Spreizelementes auf den Schenkelabschnitten des benachbarten Spreizelementes zu liegen kommt. Dadurch können mit derselben Anzahl an Spreizelementen ganz unterschiedliche Stapelhöhen gebildet werden, je nachdem wie die benachbarten Spreizelemente zueinander ausgerichtet sind.

Bei einer Weiterbildung der Erfindung ist das wenigstens eine Spreizelement mehrteilig aufgebaut, mit Spreizelementteilen, die in Axialrichtung hintereinander auf dem zugeordneten Befestigungselement aufgereiht sind, wobei die Spreizelementteile einander zugewandte Gleitflächen aufweisen, die derart zueinander ausgerichtet sind, dass diese unter der Wirkung der Befestigungsbewegung zum Erreichen der Klemmstellung in Richtung nach radial außen aufeinander abgleiten. Die Spreizelementteile können beispielsweise aus unter der Wirkung der Befestigungsbewegung im Wesentlichen unverformbarem Material bestehen.

In besonders bevorzugter Weise sind die Spreizelementteile jeweils als von der Durchgangsöffnung durchsetzte Zylinderkörper ausgestaltet, wobei die jeweiligen Gleitflächen schräg, insbesondere im Winkel von ca. 45°, gegenüber der Axialrichtung ausgerichtet sind.

Um eine radiale Verlagerung der Spreizelementteile unter Einwirkung der Befestigungsbewegung zu unterstützen, ist es zweckmäßig, die Spreizelemente jeweils mit einer in radialer Richtung verlaufenden und die Wandung des Zylinderkörpers durchsetzenden Schlitzöffnung auszustatten.

Bei einer Weiterbildung der Erfindung ist das Befestigungselement als Zentrierzapfen ausgebildet, der am Beschlagteil in Axialrichtung über ein manuell betätigbares Betätigungselement bewegbar gelagert ist und die auf einen Schaftabschnitt des Zentrierzapfens aufgefädelten Spreizelemente bei der über das Betätigungselement eingeleiteten Befestigungsbewegung in die Klemmstellung drückt. Bei dem Betätigungselement kann es sich beispielsweise um einen Spannhebel handeln, der manuell betätigbar ist und beispielsweise mit Hilfe eines Exzenters eine axiale Verlagerung des Betätigungselements im zugeordneten Befestigungsloch bewirkt, wodurch bei der Befestigungs- bzw. Spannbewegung ein radiales Aufspreizen des Spreizelementes stattfindet.

Es ist möglich, dass das Befestigungselement an seinen dem Beschlagteil abgewandten freien Ende ein insbesondere als Ringkörper ausgebildetes Fixierelement zur axialen Fixierung des wenigstens einen Spreizelementes aufweist. Zweckmäßigerweise ist das Fixierelement lösbar mit dem Schaftabschnitt verbunden, wodurch das wenigstens eine Spreizelement zunächst aufgefädelt und danach das Fixierelement am Schaftabschnitt befestigt werden kann. Alternativ wäre es insbesondere auch bei elastischen Spreizelementen möglich, die Durchgangsöffnung so weit aufzuweiten, dass sie über das durchmessergrößere Fixierelement passt und nach Passieren des Fixierelementes wieder in seine Ausgangsform zurückschnappt.

Die Erfindung umfasst ferner ein Möbel, mit einem bewegbaren Möbelteil, wie Klappe, Tür oder Schublade, das mit einem Möbelbeschlag nach einem der Ansprüche 1 bis 15 ausgestattet ist.

Bevorzugte Ausführungsbeispiele der Erfindung sind in der Zeichnung dargestellt und werden im Folgenden näher erläutert. In der Zeichnung zeigen:
- Figur 1: einen Schnitt durch ein erstes Ausführungsbeispiel des erfindungsgemäßen Möbelbeschlags im montierten Nutzzustand an einem bewegbaren Möbelteil, wobei zwei jeweils mit Spreizelementen ausgestattete Befestigungselemente vorgesehen sind, von denen die dem rechten Befestigungselement zugeordneten Spreizelemente radial in die Klemmstellung aufgespreizt sind,
- Figur 2: der Möbelbeschlag von Figur 1 im nicht montierten Zustand,
- Figur 3: eine Seitenansicht auf zu einem Spreizelement-Stapel aufeinandergestapelte Spreizelemente,
- Figur 4: einen Schnitt durch den Spreizelement-Stapel von Figur 3 entlang der Linie IV-IV in Figur 3, wobei der Schnitt in zur Figur 3 auf dem Kopf stehender Lage gezeigt ist,
- Figur 5: eine Draufsicht auf den Spreizelement-Stapel von Figur 3,
- Figur 6: eine perspektivische Ansicht eines Spreizelementes, das im Spreizelement-Stapel von Figur 3 verwendet ist,
- Figur 7: eine Seitenansicht des Spreizelements von Figur 6,
- Figur 8: eine um 90° gegenüber der Seitenansicht von Figur 7 gedrehte Seitenansicht, wobei sich das Spreizelement zusätzlich noch in zur Figur 7 umgekehrten Lage befindet,
- Figur 9: eine Draufsicht auf das Spreizelement von Figur 6,
- Figur 10: ein Schnitt durch ein nicht erfindungsgemäßes Ausführungsbeispiel des Möbelbeschlags, wobei das dem rechten Befestigungselement zugeordnete Spreizelement radial in die Klemmstellung aufgespreizt ist,
- Figur 11: der Möbelbeschlag von Figur 10 im nicht montierten Zustand,
- Figur 12: eine Draufsicht auf ein Spreizelementteil des Spreizelements von Figur 10,
- Figur 13: einen Schnitt durch das Spreizelementteil von Figur 12 entlang der Linie XIII-XIII von Figur 12,
- Figur 14: eine perspektivische Darstellung des Spreizelementteils von Figur 12 und
- Figur 15: eine Seitenansicht des Spreizelementteils von Figur 12.

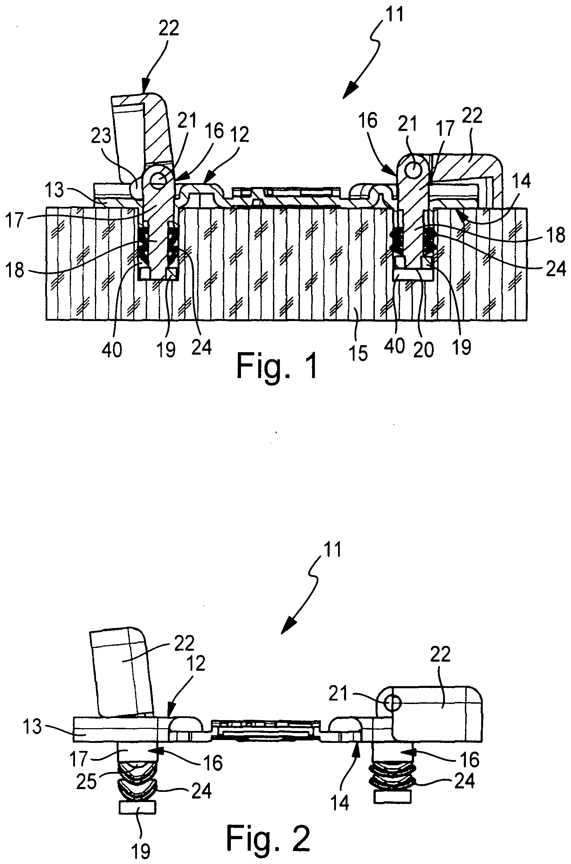

Die Figuren 1 und 2 zeigen ein erstes Ausführungsbeispiel des erfindungsgemäßen Möbelbeschlags 11. Der Möbelbeschlag 11 kann beispielsweise als Frontblenden-Halterungsbeschlag ausgebildet sein, der für die werkzeuglose, schnelle und einfache Montage - sowie Demontage - einer Frontblende einer Schublade am Schubladenkasten geeignet ist. Alternativ wäre es jedoch auch denkbar, dass der Möbelbeschlag 11 als Möbelscharnier ausgebildet ist, mit dem sich ein bewegbares Möbelteil in Form beispielsweise eines Türflügels am Möbelkorpus befestigen lässt. Schließlich wäre auch eine Ausgestaltung des Möbelbeschlags 11 in Form eines Klappenbeschlags denkbar, der ein bewegbares Möbelteil 15 in Form einer Möbelklappe mit dem Möbelkorpus verbindet. Die Erfindung ist bei sämtlichen vorerwähnten Ausgestaltungen des Möbelbeschlags 11 sowie auch bei anderen, nicht erwähnten Ausgestaltungen verwirklichbar und wird im Folgenden rein beispielhaft anhand eines als Möbelscharnier ausgebildeten Möbelbeschlags 11 beschrieben.

Wie insbesondere Figur 1 zeigt, besitzt der Möbelbeschlag 11 ein Beschlagteil 12, das im Beispielsfall als Korpus- oder Türflügel-Anschlagteil eines Möbelscharniers ausgebildet ist. Bei dem Türflügel-Anschlagteil könnte es sich um einen Scharniertopf eines als Topfscharnier ausgebildeten Möbelscharniers handeln. Das Beschlagteil 12 weist eine Montageplatte 13 auf, dessen Unterseite eine Anlagefläche 14 bildet, die bei der Montage in Anlage mit dem bewegbaren Möbelteil 15, also im Beispielsfall mit einem Türflügel oder dem Möbelkorpus, gebracht wird.

Das Beschlagteil 12 umfasst ferner wenigstens ein zapfenartiges Befestigungselement 16, wobei im Beispielsfall zwei solche Befestigungselemente 16 dargestellt sind. Das zapfenartige Befestigungselement 16 wird bei der Montage in ein am bewegbaren Möbelteil 15 ausgebildetes Befestigungsloch 40 eingeführt und dort in nachfolgend noch beschriebener Weise verankert.

Das zapfenartige Befestigungselement 16 besitzt einen Basisabschnitt 17, der die Montageplatte 13 durchsetzt. Der Basisabschnitt 17 geht in einen durchmesserkleineren Schaftabschnitt 18 über, an dessen freien Ende sich ein als Ringkörper ausgebildetes Fixierelement 19 befindet. Das ringkörperartige Fixierelement 19, das auch als Fixierring bezeichnet werden könnte, ist lösbar mit dem Schaftabschnitt 18 verbunden. Beispielsweise kann es durch komplementär an Schaftabschnitt 18 und Fixierelement ausgebildete Gewinde auf den Schaftabschnitt 18 aufgeschraubt werden. Die Unterseite des Fixierelements 19 bildet gemeinsam mit der freien Stirnfläche des Schaftabschnitts 18 eine Anschlagfläche 20, die am Boden des als Sackloch ausgestalteten Befestigungsloches 40 anschlägt.

An dem dem Schaftabschnitt 18 entgegengesetzten Ende des Basisabschnitts 17 befindet sich eine Lagerachse 21, an der ein Betätigungselement 22 in Form eines Spannhebels schwenkbar gelagert ist. Der Spannhebel lässt sich manuell zwischen einer am in Figur 1 rechten Befestigungselement gezeigten Spannstellung und einer Losstellung verschwenken. Das Betätigungselement 22 besitzt im Bereich der Lagerachse 21 eine Exzenterpartie 23, die sich an der Oberseite der Montageplatte 13 abstützt. In der in Figur 1 am linken Betätigungselement 22 gezeigten Losstellung liegt der der Lagerachse 21 nähere Bereich der Exzenterpartie 23 an der Oberseite der Montageplatte 13 an. Verschwenkt man den Spannhebel aus der Losstellung in die in Figur 1 am rechten Befestigungselement 16 gezeigte Spannstellung, liegt der der Lagerachse 21 entferntere Bereich der Exzenterpartie 23 auf der Oberseite der Montageplatte 13, wodurch das Befestigungselement 16 eine hochgezogene Stellung einnimmt.

Den Befestigungselementen 16 ist jeweils wenigstens ein Spreizelement 24 zugeordnet, das über eine relativ zwischen Befestigungselement 16 und Spreizelement 24 wirkende Befestigungsbewegung, also durch Spannen des Spannhebels, radial aufspreizbar und in einer dadurch erzielbaren Klemmstellung mit einer Wandung des Befestigungslochs 40 verspannbar ist.

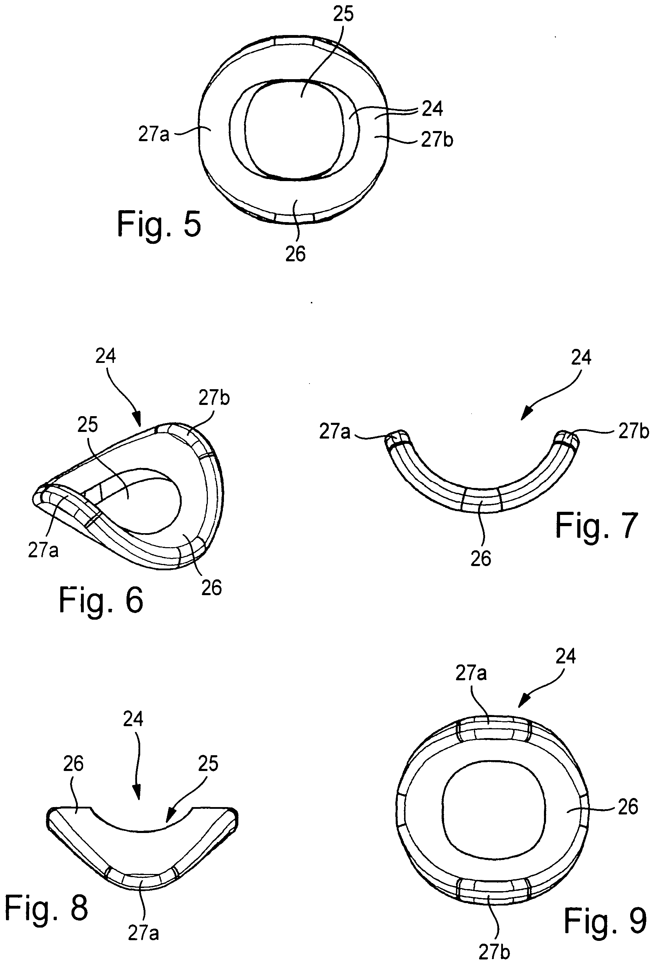

Ein solches Spreizelement 24 ist insbesondere in den Figuren 6 bis 9 näher dargestellt. Das Spreizelement 24 besteht aus elastisch verformbarem Material, beispielsweise Metall, insbesondere Stahl, oder Kunststoff. Wie insbesondere in Figur 6 dargestellt, besitzt das Spreizelement 24 eine charakteristische Form mit einer Wölbung. Die sich in Axialrichtung erstreckende Wölbungshöhe der Wölbung ist unter der Wirkung der Befestigungsbewegung unter radialer Aufspreizung verringerbar. Das Spreizelement 24 ist als Ringkörper ausgestaltet und besitzt eine insbesondere zentral liegende Durchgangsöffnung 25. Wie insbesondere in Figur 7 dargestellt, ist das Spreizelement 24 im Querschnitt U-ähnlich ausgestaltet. Dabei sind ein von der Durchgangsöffnung 25 durchsetzter Basisabschnitt 26 und zwei vom Basisabschnitt 26 in divergierender Weise wegragende Schenkelabschnitte 27a, 27b vorgesehen. Insgesamt ist das Spreizelement 24 sattelartig ausgebildet. Wie insbesondere in Figur 9 gezeigt, ist das Spreizelement 24 in Draufsicht O-ähnlich ausgestaltet. Dabei zeigt Figur 9 eine ungespreizte Ausgangsstellung, während sich diese Form beim radialen Aufspreizen in ein Oval ändert.

Wie insbesondere in den Figuren 1 bis 4 dargestellt, sind jedem Befestigungselement 16 mehrere Spreizelemente 24 zugeordnet, die in Axialrichtung hintereinander auf dem zugeordneten Befestigungselement 16 zu einem Spreizelement-Stapel aufgereiht sind. Im Beispielsfall sind dies zwei oder vier Spreizelemente 24.

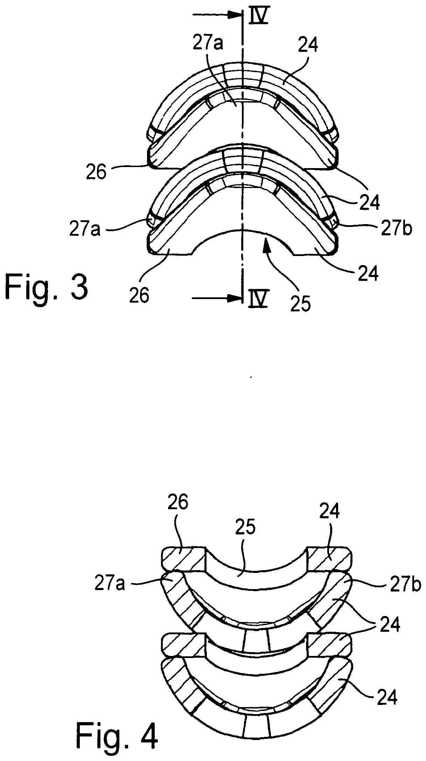

Wie insbesondere in den Figuren 3 und 4 gezeigt, kann die Stapelhöhe eines Spreizelement-Stapels durch unterschiedliche Ausrichtung benachbarter Spreizelemente 24 zueinander variiert werden. In Figur 3 sind beispielsweise die beiden oberen Spreizelemente 90° versetzt zueinander ausgerichtet, wodurch der Basisabschnitt 26 des einen Spreizelementes 24 auf den Schenkelabschnitten 27a, 27b des anderen Spreizelementes 24 zu liegen kommt. Die sich in Axialrichtung erstreckende Höhe dieser beiden aufeinandergestapelten Spreizelemente 24 ist beispielsweise deutlich größer als im Fall, dass die beiden Spreizelemente 24 gleichgerichtet bzw. gleichsinnig zueinander ausgerichtet sind. Bei gleichsinniger Ausrichtung kommen die einander benachbarten Basisabschnitte 26 und die einander benachbarten Schenkelabschnitte 27a, 27b der beiden Spreizelemente aufeinander zu liegen, wodurch sich ein kompakter Stapel ergibt. Eine weitere Variante ist der Stapel, der durch die beiden in Figur 3 dargestellten mittleren Spreizelemente 24 gebildet ist. In diesem Fall sind die beiden Spreizelemente in umgekehrter Lage zueinander ausgerichtet, wodurch die beiden Unterseiten der Basisabschnitte 26 aufeinander zu liegen kommen, wodurch sich eine noch größere Stapelhöhe ergibt. Ein wichtiger Aspekt ist, dass unabhängig von der Anzahl und der Ausrichtung aufeinander gestapelter Spreizelemente sich stets, wie in Figur 5 dargestellt, eine in Draufsicht im Wesentlichen O-ähnliche oder kreisartige Form ergibt, wodurch das Einführen in ein im Querschnitt rundes Befestigungsloch 40 am bewegbaren Möbelteil 25 in einfacher Weise möglich ist.

Zur Befestigung des Möbelbeschlags 11 am bewegbaren Möbelteil 15, beispielsweise Türflügel, werden die Spreizelemente 24 zunächst in der erforderlichen Anzahl und Ausrichtung auf den Schachtabschnitt 18 des zapfenartigen Befestigungselementes 16 aufgefädelt. Dabei ist das ringkörperartige Fixierelement vom Schaftabschnitt 18 abgenommen und wird nach dem Auffädeln der Spreizelemente 24 wieder am Schaftabschnitt 18 befestigt.

Als nächstes werden die mit Spreizelementen 24 bestückten Befestigungselemente 16 in die hierfür vorgesehenen Befestigungslöcher 40 am bewegbaren Möbelteil 15 eingeführt, bis die Anlagefläche 14 an der Unterseite der Montageplatte 13 auf der Montagefläche des bewegbaren Möbelteils 15 zur Anlage kommt. Bei diesem Vorgang ist das Betätigungselement 22 in Form des Spannhebels in seiner Losstellung. Die Spreizelemente 24 sind lose auf dem Schaftabschnitt 18 gelagert, werden jedoch in Axialrichtung an der Unterseite durch das Fixierelement 19 und an der Oberseite durch den durchmessergrößeren Basisabschnitt 17 des Befestigungselementes 16 fixiert. Die Spreizelemente 24 sind relativ verschieblich zum Schaftabschnitt 18 gelagert. Wird der Spannhebel dann in seine Spannstellung verschwenkt, so wird das Befestigungselement 16 durch den Exzenterabschnitt 23 am Spannhebel nach oben gedrückt. Die Spreizelemente 24 bleiben jedoch in Position und werden durch das Fixierelement 19 radial aufgespreizt und gleichzeitig plattgedrückt, so dass sich eine Verringerung des Axialmaßes des Spreizelementes 24 bzw. des Spreizelement-Stapels ergibt. Dieser Vorgang des radialen Aufspreizens bei gleichzeitiger Verringerung des Axialmaßes führt zu einer Verspannung mit der Wandung des Befestigungsloches 40. Das Befestigungselement 16 ist nun im Befestigungsloch 40 verankert.

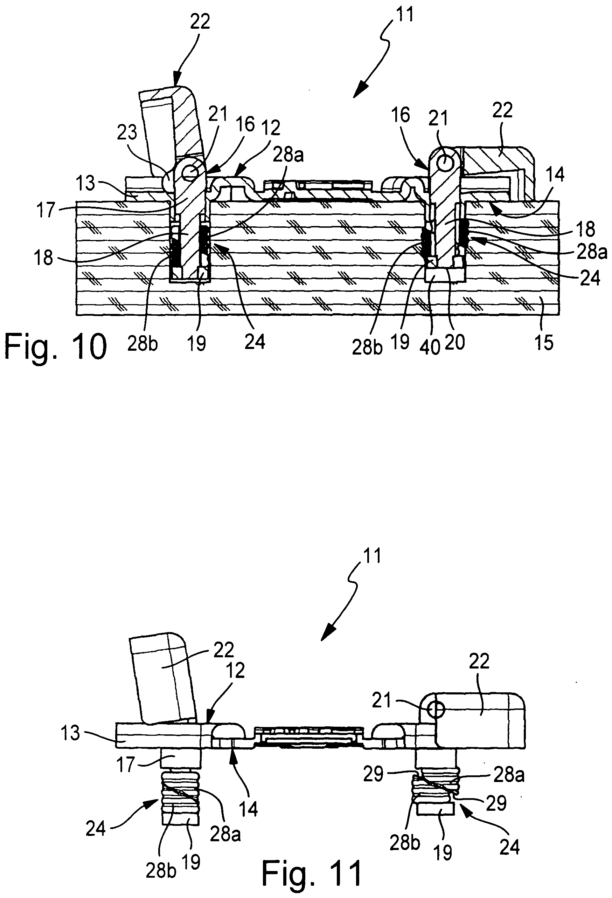

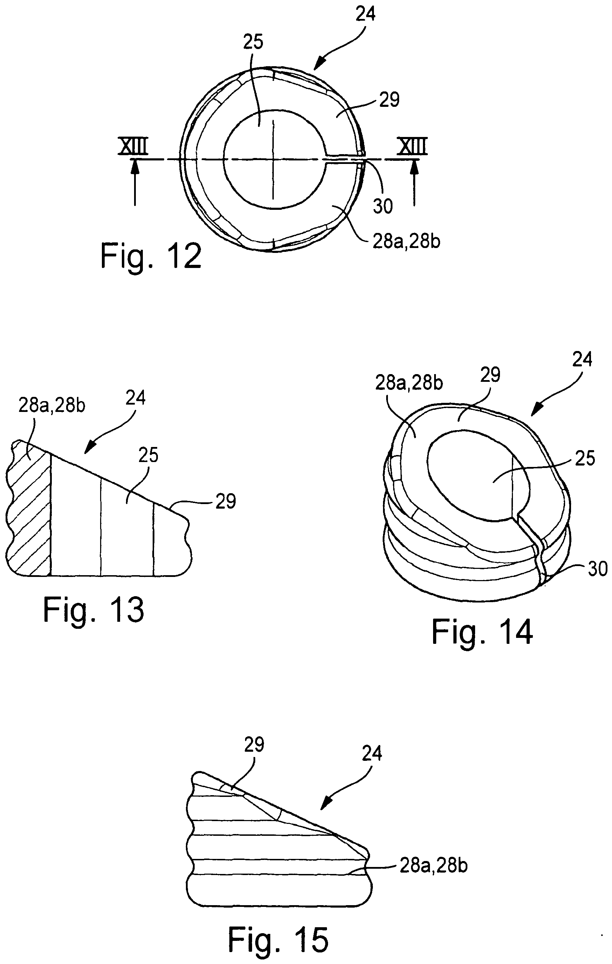

Die Figuren 10 bis 15 zeigen ein nicht erfindungsgemäßes Ausführungsbeispiel des Möbelbeschlags. Beschlagteil 12, Montageplatte 13, Befestigungselement 16 und Betätigungselement 22 sind im Wesentlichen in identischer Weise zu dem zuvor beschriebenen Ausführungsbeispiel aufgebaut, so dass darauf nicht näher eingegangen wird. Das zweite Ausführungsbeispiel unterscheidet sich also in der Ausgestaltung der Spreizelemente 24 vom zuvor beschriebenen ersten Ausführungsbeispiel. Die Spreizelemente 24 des zweiten Ausführungsbeispiels sind mehrteilig aufgebaut und besitzen jeweils wenigstens zwei, insbesondere genau zwei, Spreizelementteile 28a, 28b, die in Axialrichtung hintereinander auf dem Schaftabschnitt 18 des Befestigungselements aufgereiht sind. Wie insbesondere in den Figuren 13 bis 15 gezeigt, bestehen die Spreizelementteile 28, 28a, 28b jeweils als von der Durchgangsöffnung 25 durchsetzte Zylinderkörper, die an einer Stirnseite abgeschrägt sind. Diese abgeschrägten Flächen dienen als Gleitflächen 29. Beispielsweise sind die Gleitflächen 29 im Winkel von ca. 45° gegenüber der Axialrichtung ausgerichtet. Die Spreizelementteile 28a, 28b besitzen jeweils noch eine in radialer Richtung verlaufende und die Wandung des Zylinderkörpers durchsetzende Schlitzöffnung 30. Im Gegensatz zu den Spreizelementen des ersten Ausführungsbeispiels sind die Spreizelemente 24, mithin also die Spreizelementteile 28a, 28b, aus unter der Wirkung der Befestigungsbewegung im Wesentlichen unverformbarem Material hergestellt. Hier kann beispielsweise Metall oder Kunststoff verwendet werden.
Zur Befestigung des Möbelbeschlags am zugeordneten bewegbaren Möbelteil, also beispielsweise Türflügel, werden die beiden Spreizelementteile 28a, 28b zunächst auf den Schaftabschnitt 18 aufgefädelt. Hierbei ist das Fixierelement 19 wiederum vom Schaftabschnitt 28 aufgenommen, um das Auffädeln zu ermöglichen. Ein wichtiger Aspekt dabei ist, dass die Spreizelementteile 28a, 28b derart aufgefädelt werden, dass die Gleitfläche 29 aufeinander zu liegen kommen.

Als nächstes werden die mit den Spreizelementen 24 bestückten Befestigungselemente wieder in das zugeordnete Befestigungsloch 40 am bewegbaren Möbelteil 15 eingeführt. Dann wird der Spannhebel in die Spannstellung verschwenkt, wobei das Befestigungselement, wie bereits beschrieben, in Axialrichtung nach oben zur Montageplatte 13 hin hochgezogen wird. Dabei greift das Fixierelement 19 wiederum an die Spreizelemente 24 an und drückt die beiden Gleitflächen 29 aneinander, die aufeinander abgleiten. Aufgrund der radialen Schlitzöffnung 30 an den beiden Spreizelementteilen 28a, 28b ist eine radiale Verlagerung der Spreizelementteile 28a, 28b, also eine radiale Aufspreizung, möglich, wobei gleichzeitig auch das Axialmaß des aus den beiden Spreizelementteilen 28a, 28b bestehenden Spreizelements 24 verringert wird. Wie beim zuvor beschriebenen ersten Ausführungsbeispiel kommt es zu einer Verspannung mit der Wandung des Befestigungslochs 40, wodurch das Befestigungselement 16 im Befestigungsloch 40 verankert ist.

## Patentansprüche

1. Möbelbeschlag für ein bewegbares Möbelteil (15), insbesondere Tür, Klappe, Schublade oder dergleichen, mit wenigstens einem Beschlagteil (12) mit Befestigungselementen (16), die am bewegbaren Möbelteil (15) oder an einem Möbelkorpus eines mit dem bewegbaren Möbelteil (15) ausgestatteten Möbels ausgebildeten Befestigungslöcher (40) zugeordnet und in diese einführbar sind, wobei den Befestigungselementen (16) jeweils wenigstens ein Spreizelement (24) zugeordnet ist, das über eine relativ zwischen Befestigungselement (16) und Spreizelement (24) wirkenden Befestigungsbewegung radial aufspreizbar und in einer dadurch erzielbaren Klemmstellung mit einer Wandung des Befestigungsloches (40) verspannbar ist, wobei das wenigstens eine Spreizelement (24) eine Durchgangsöffnung (25) aufweist, über das es auf dem zugeordneten Befestigungselement (16) aufgefädelt ist und dort relativ zu diesem derart verschieblich gelagert ist, dass die radiale Aufspreizung und Verspannung mit der Wandung des Befestigungsloches (40) bei Einleitung der Befestigungsbewegung über eine Verringerung des Axialmaßes des Spreizelementes (24) erzielbar ist, wobei das Spreizelement (24) eine Wölbung aufweist, dessen sich in Axialrichtung erstreckende Wölbungshöhe unter der Wirkung der Befestigungsbewegung unter radialer Aufspreizung verringerbar ist, wobei das Spreizelement (24) als im Querschnitt U-ähnlich gewölbter Ringkörper ausgestaltet ist, mit einem von der Durchgangsöffnung durchsetzten Basisabschnitt (26), **dadurch gekennzeichnet, dass** das Spreizelement (24) zwei vom Basisabschnitt (26) in divergierender Weise wegragende Schenkelabschnitte (27a,27b) aufwiest, wobei das Spreizelement (24) insgesamt sattelartig ausgebildet ist.

2. Möbelbeschlag nach Anspruch 1, **dadurch gekennzeichnet, dass** das wenigstens eine Spreizelement (24) aus verformbarem Material besteht und unter der Wirkung der Befestigungsbewegung in die Klemmstellung verformbar ist.

3. Möbelbeschlag nach Anspruch 2, **dadurch gekennzeichnet, dass** es sich bei dem verformbaren Material um elastisch verformbares Material handelt, wodurch das Spreizelement (24) unter der Wirkung einer Lösebewegung des Befestigungselementes (16) im Wesentlichen in eine ungespreizte Ausgangsstellung zurück verformbar ist.

4. Möbelbeschlag nach einen der vorhergehenden Ansprüche, **dadurch gekennzeichnet, dass** das Spreizelement (24) in Draufsicht O-ähnlich ausgestaltet ist.

5. Möbelbeschlag nach einem der vorhergehenden Ansprüche, **dadurch gekennzeichnet, dass** mehrere Spreizelemente (24) in Axialrichtung hintereinander auf dem zugeordneten Befestigungselement (16) zu einem Spreizelement-Stapel aufgereiht sind.

6. Möbelbeschlag nach Anspruch 5, **dadurch gekennzeichnet, dass** einander benachbarte Spreizelemente (24) entweder gleichsinnig zueinander ausgerichtet sind, wodurch einander benachbarten Basisabschnitte (26) ineinander greifen oder verdreht zueinander ausgerichtet sind, wodurch der Basisabschnitt (26) des einen Spreizelementes (24) auf den Schenkelabschnitten (27a, 27b) des benachbarten Spreizelementes (24) zu liegen kommt.

7. Möbelbeschlag nach einem der vorhergehenden Ansprüche, **dadurch gekennzeichnet, dass** das Befestigungselement (16) als Zentrierzapfen ausgebildet ist, der am Beschlagteil (12) in Axialrichtung über ein manuell betätigbares Betätigungselement (22) beweglich gelagert ist und die auf einen Schaftabschnitt (18) des Zentrierzapfens aufgefädelten Spreizelemente (24), bei der über das Betätigungselement (22) eingeleiteten Befestigungsbewegung in die Klemmstellung drückt.

8. Möbelbeschlag nach Anspruch 7, **dadurch gekennzeichnet, dass** das Befestigungselement (16) an seinem dem Beschlagteil (12) abgewandten freien Ende eine insbesondere als Ringkörper ausgebildetes Fixierelement (19) zur axialen Fixierung des wenigstens einen Spreizelementes (24) aufweist.

9. Möbelbeschlag nach Anspruch 8, **dadurch gekennzeichnet, dass** das Fixierelement lösbar mit dem Schaftabschnitt (18) verbunden ist.

10. Möbel, mit einem bewegbaren Möbelteil (15), wie Klappe, Tür oder Schublade, **gekennzeichnet durch** einen Möbelbeschlag (11) nach einem der Ansprüche 1 bis 9.

## Claims

1. Furniture fitting for a movable furniture part (15), in particular door, flap, drawer or the like, with at least one fitting component (12) with mounting elements (16) which are assigned to and may be inserted into mounting holes (40) formed on the movable furniture part (15) or on a furniture carcass of a piece of furniture equipped with the movable furniture part (15), wherein the mounting elements (16) are in each case assigned at least one spreader element (24) which may be spread open radially through a mounting movement acting between mounting element (16) and spreader element (24) and may be braced, in a clamped position reachable in this way, with a wall of the mounting hole (40), wherein the spreader element or elements (24) has or have a through hole (25) through which it or they may be strung on to the assigned mounting element (16) and mounted there movable relative to the latter, that the radial spreading apart and bracing with the wall of the mounting hole (40) are achievable via a reduction in the axial dimension of the spreader element (24), wherein the spreader element (24) has a curvature, the curvature height of which in the axial direction may be reduced under the action of the mounting movement with radial spreading apart, wherein the spreader element (24) is in the form of an annular body with a U-shaped curve in cross-section and with a base section (26) through which the through hole passes, **characterised in that** the spreader element (24) has two leg sections (27a, 27b) extending away from the base section (26) in a diverging manner, wherein the spreader element (24) as a whole is saddle-shaped in form.

2. Furniture fitting according to claim 1, **characterised in that** the spreader element or elements (24) is or are made of deformable material and is or are deformable into the clamped position under the action of the mounting movement.

3. Furniture fitting according to claim 2, **characterised in that** the deformable material is an elastically deformable material, whereby the spreader element (24) may be deformed back substantially into an unspread original position under the action of a release movement of the mounting element (16).

4. Furniture fitting according to any of the preceding claims, **characterised in that** the spreader element (24) is O-shaped when viewed from above.

5. Furniture fitting according to any of the preceding claims, **characterised in that** several spreader elements (24) are lined up in the axial direction one behind the other on the assigned mounting element (16), to form a spreader element stack.

6. Furniture fitting according to claim 5, **characterised in that** adjacent spreader elements (24) are either aligned in the same direction towards one another, whereby adjacent base sections (26) engage on one another or are aligned twisted relative to one another, whereby the base section (26) of the one spreader element (24) comes to lie on the leg sections (27a, 27b) of the adjacent spreader element (24).

7. Furniture fitting according to any of the preceding claims, **characterised in that** the mounting element (16) is in the form of a spigot, which is movably mounted on the fitting component (12) in the axial direction via a manually actuable actuating element (22), and presses the spreader elements (24) strung on a shank section (18) of the spigot into the clamped position during the mounting movement initiated via the actuating element (22).

8. Furniture fitting according to claim 7, **characterised in that** the mounting element (16) has, at its free end facing away from the fitting component (12), a fixing element (19) in particular in the form of an annular body, for axial fixing of the spreader element or elements (24).

9. Furniture fitting according to claim 8, **characterised in that** the fixing element is connected releasably to the shank section (18).

10. Piece of furniture with a movable furniture part (15), such as a flap, door or drawer, **characterised by** a furniture fitting (11) according to any of claims 1 to 9.

## Revendications

1. Ferrure de meuble pour une partie de meuble (15) pouvant être déplacée, en particulier une porte, un abattant, un tiroir ou similaire, avec au moins une partie de ferrure (12) avec des éléments de fixation (16), qui sont associés à des trous de fixation (40) réalisés au niveau de la partie de meuble (15) pouvant être déplacée ou au niveau d'un corps de meuble d'un meuble équipé de la partie de meuble (15) pouvant être déplacée et peuvent être introduits dans ceux-ci, dans laquelle respectivement au moins un élément d'écartement (24) est associé aux éléments de fixation (16), lequel peut être écarté de manière radiale par l'intermédiaire d'un déplacement de fixation agissant de manière relative entre l'élément de fixation (16) et l'élément d'écartement (24) et qui peut être assemblé par tension à une paroi du trou de fixation (40) dans une position de serrage pouvant être obtenue ainsi, dans laquelle l'au moins un élément d'écartement (24) présente une ouverture de passage (25), par l'intermédiaire de laquelle il peut être enfilé sur l'élément de fixation (16) associé et y être monté de manière à pouvoir coulisser par rapport à ce dernier de telle manière que l'écartement radial et l'assemblage par tension à la paroi du trou de fixation (40) peuvent être obtenus lors de l'initiation du déplacement de fixation par l'intermédiaire d'une réduction de la dimension axiale de l'élément d'écartement (24), dans laquelle l'élément d'écartement (24) présente un bombement, dont la hauteur de bombement s'étendant dans la direction axiale peut être réduite sous l'effet du déplacement de fixation moyennant un écartement radial, dans laquelle l'élément d'écartement (24) est configuré sous la forme d'un corps annulaire bombé à la manière d'un U dans la section transversale, avec une section de base (26) traversée par l'ouverture de passage, **caractérisée en ce que** l'élément d'écartement (24) présente deux sections de branche (27a, 27b) dépassant de la section de base (26) de manière divergente,
dans laquelle l'élément d'écartement (24) est réalisé globalement à la manière d'une selle.

2. Ferrure de meuble selon la revendication 1, **caractérisée en ce que** l'au moins un élément d'écartement (24) est constitué d'un matériau déformable et peut être déformé sous l'effet du déplacement de fixation dans la position de serrage.

3. Ferrure de meuble selon la revendication 2, **caractérisée en ce que** le matériau déformable est un matériau élastiquement déformable, ce qui permet de déformer l'élément d'écartement (24) sous l'effet d'un déplacement de desserrage de l'élément de fixation (16) de manière à revenir sensiblement dans une position de départ non écartée.

4. Ferrure de meuble selon l'une quelconque des revendications précédentes, **caractérisée en ce que** l'élément d'écartement (24) est configuré vu d'en haut de manière similaire à un O.

5. Ferrure de meuble selon l'une quelconque des revendications précédentes, **caractérisée en ce que** plusieurs éléments d'écartement (24) sont alignés les uns derrière les autres dans la direction axiale sur l'élément de fixation (16) associé en un empilement d'éléments d'écartement.

6. Ferrure de meuble selon la revendication 5, **caractérisée en ce que** soit des éléments d'écartement (24) adjacents les uns aux autres sont orientés dans le même sens les uns par rapport aux autres, ce qui a pour effet que des sections de base (26) adjacentes les unes aux autres s'imbriquent, soit ils sont orientés de manière tournée les uns par rapport aux autres ce qui a pour effet que la section de base (26) d'un élément d'écartement (24) vient reposer sur les sections de branche (27a, 27b) de l'élément d'écartement (24) adjacent.

7. Ferrure de meuble selon l'une quelconque des revendications précédentes, **caractérisée en ce que** l'élément de fixation (16) est réalisé sous la forme d'un tourillon de centrage, qui est monté de manière mobile au niveau de la partie de ferrure (12) dans la direction axiale par l'intermédiaire d'un élément d'actionnement (22) pouvant être actionné manuellement et pousse les éléments d'écartement (24) enfilés sur une section de tige (18) du tourillon de centrale dans le cas du déplacement de fixation, initiée par l'intermédiaire de l'élément d'actionnement (22), dans la position de serrage.

8. Ferrure de meuble selon la revendication 7, **caractérisée en ce que** l'élément de fixation (16) présente, au niveau de son extrémité libre opposée à la partie de ferrure (12), un élément de blocage (19) réalisé en particulier sous la forme d'un corps annulaire servant à bloquer de manière axiale l'au moins un élément d'écartement (24).

9. Ferrure de meuble selon la revendication 8, **caractérisée en ce que** l'élément de blocage est relié de manière amovible à la section de tige (18).

10. Meuble avec une partie de meuble (15) pouvant être déplacée, telle qu'un abattant, une porte ou un tiroir, **caractérisé par** une ferrure de meuble (11) selon l'une quelconque des revendications 1 à 9.
